# EUROPEAN PATENT APPLICATION

(11) **EP 4 296 905 A1**
(43) Date of publication of application: **27.12.2023**
(21) Application number: 21933137.8
(22) Date of filing: 26.03.2021
(51) Int. Cl.: G06N 3/08

(54) **RELEARNING SYSTEM AND RELEARNING METHOD**

(71) Applicant: Mitsubishi Electric Corporation, Tokyo 100-8310 (JP)
(72) Inventor: IMAI Yoshie, Tokyo 100-8310 (JP); TSUCHIYA Masato, Tokyo 100-8310 (JP)
(74) Representative: Pfenning, Meinig & Partner mbB
(86) International application number: PCT/JP2021/013073
(87) International publication number: WO 2022/201534

(57) **Abstract**

A relearning system (100) includes a model storage unit (113) that stores a second neural network learned so that a recognition result by the second neural network used as a student model approaches a recognition result by a first neural network used as a teacher model; a recognition unit (114) that recognizes a recognition target by using the second neural network to draw an inference about recognition target data indicating the recognition target; an accumulation determination unit (116) that determines whether or not certainty of the recognition is at a mid-level; an accumulation unit (1.17) that accumulates the recognition target data as relearning data when the certainty of the recognition is at mid-level, the certainty of the recognition of the recognition target data being determined to be at mid-level; and a model learning unit (133) that relearns the student model by using the relearning data so that a recognition result of the student model approaches a recognition result of the teacher model.

## Description

### TECHNICAL FIELD

The disclosure relates to a relearning system and a relearning method.

### BACKGROUND ART

In recent years, knowledge distillation has been performed in the field of data recognition. In knowledge distillation, a large, complex, pre-learned neural network is prepared as a teacher model and a smaller, simpler neural network that resides on the application side is prepared as a student model, and the student model is learned so that the output data of the student model approaches the output data of the teacher model.

For example, Patent Literature 1 describes a method of training a student model that corresponds to a teacher model.

### PRIOR ART REFERENCE

### PATENT REFERENCE

Patent Literature 1: Japanese Patent Application Publication No. 2020-71883

### SUMMARY OF THE INVENTION

### PROBLEM TO BE SOLVED BY THE INVENTION

However, in some cases of knowledge distillation, the recognition performance of the student model is inferior to that of the teacher model, and knowledge may not be appropriately transferred.

Accordingly, an object of one or more aspects of the disclosure is to enable appropriate relearning of untransferred knowledge.

### MEANS OF SOLVING THE PROBLEM

A relearning system according to an aspect of the disclosure includes: a model storage unit configured to store a second neural network learned so that a recognition result by the second neural network used as a student model approaches a recognition result by a first neural network used as a teacher model; a recognition unit configured to perform recognition of a recognition target by using the second neural network to draw an inference about recognition target data indicating the recognition target; a determination unit configured to determine whether or not certainty of the recognition is at a mid-level; an accumulation unit configured to accumulate the recognition target data as relearning data when the certainty of the recognition is at mid-level, the certainty of the recognition of the recognition target data being determined to be at mid-level; and a model learning unit configured to relearn the student model by using the relearning data so that a recognition result of the student model approaches a recognition result of the teacher model.

A relearning method according to an aspect of the disclosure includes: recognizing a recognition target by using a second neural network to draw an inference about recognition target data indicating the recognition target, the second neural network being learned so that a recognition result of the second neural network used as a student model approaches a recognition result of a first neural network used as a teacher model; determining whether or not certainty of the recognition is at a mid-level; accumulating the recognition target data as relearning data when the certainty of the recognition is at mid-level, the certainty of the recognition of the recognition target data being determined to be at mid-level; and relearning the student model by using the relearning data so that a recognition result of the student model approaches a recognition result of the teacher model.

### EFFECTS OF THE INVENTION

According to one or more aspects of the disclosure, untransferred knowledge can be appropriately relearned.

### BRIEF DESCRIPTION OF THE DRAWINGS

FIG. 1 is a block diagram schematically illustrating a configuration of a relearning system according to a first embodiment.
FIG. 2 is a block diagram schematically illustrating a configuration of a computer.
FIG. 3 is a flowchart illustrating the operation of a data recognition device according to the first embodiment.
FIG. 4 is a flowchart illustrating the operation of a learning device according to the first embodiment.
FIG. 5 is a block diagram schematically illustrating a configuration of a relearning system according to a second embodiment.

### MODE FOR CARRYING OUT THE INVENTION

### FIRST EMBODIMENT

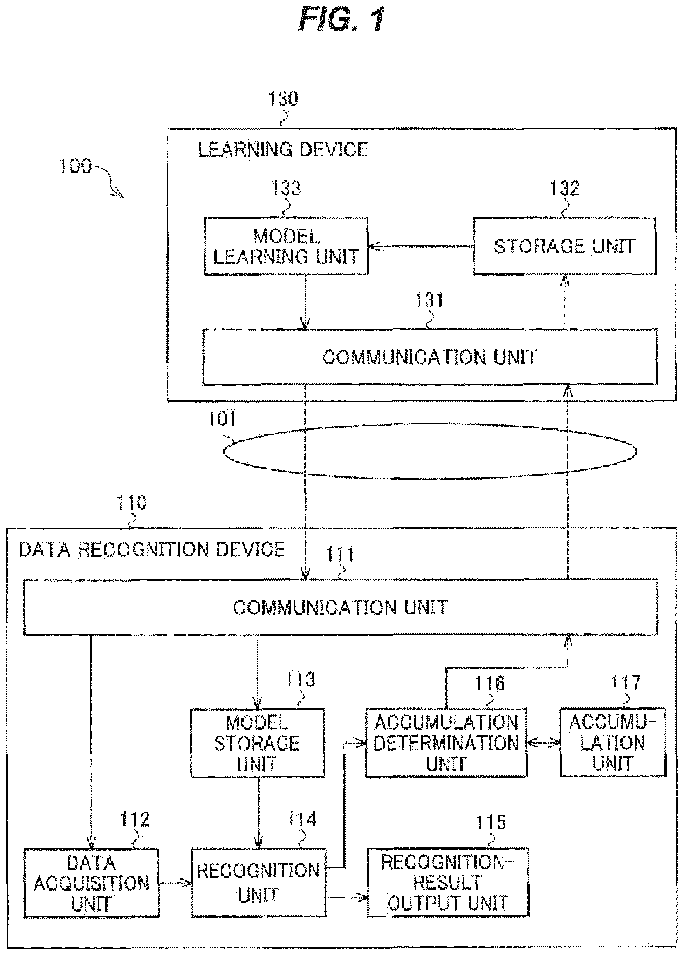

FIG. 1 is a block diagram schematically illustrating a configuration of a relearning system 100 according to the first embodiment.

The relearning system 100 includes a data recognition device 110 and a learning device 130.

For example, the data recognition device 110 and the learning device 130 can communicate with each other via a network 101 such as the Internet.

In the relearning system 100, the learning device 130 learns a student model so that the recognition result of the student model approaches the recognition result of a teacher model. Here, the neural network used as the teacher model is also referred to as a first neural network, and the neural network learned with the first neural network and used as the student model is also referred to as a second neural network.

The data recognition device 110 includes a communication unit 111, a data acquisition unit 112, a model storage unit 113, a recognition unit 114, a recognition-result output unit 115, an accumulation determination unit 116, and an accumulation unit 117.

The communication unit 111 performs communication. Here, the communication unit 111 communicates with the learning device 130.

The data acquisition unit 112 acquires recognition target data, which is data indicating a recognition target. For example, the data acquisition unit 112 acquires recognition target data from another device (not illustrated) via the communication unit 111. Here, the recognition target may be anything such as image, character, or sound.

The model storage unit 113 stores a student model, which is a neural network for recognizing a recognition target indicated by the recognition target data. For example, the communication unit 111 receives a student model from the learning device 130, and the model storage unit 113 stores this student model.

The recognition unit 114 draws an inference from the recognition target data by using the student model stored in the model storage unit 113, to recognize a recognition target indicated by the recognition target data. The recognition unit 114 gives the recognition result to the recognition-result output unit 115 and gives the recognition target data used for the recognition and an index indicating the certainty of the recognition result to the accumulation determination unit 116. The index indicates, for example, a score, a confidence level, or a likelihood.

The recognition-result output unit 115 outputs the recognition result recognized by the recognition unit 114.

The accumulation determination unit 116 is a determination unit that determines whether or not the recognition certainty of the recognition target is at a mid-level.

For example, the accumulation determination unit 116 determines that recognition certainty is at a mid-level when the index indicating the recognition certainty of a recognition target falls between a first threshold, which is an upper threshold smaller than the assumed maximum index, and a second threshold, which is a lower threshold larger than the assumed minimum index and smaller than the first threshold. The assumed maximum index is the maximum value that can be taken by the index, and the assumed minimum index is the minimum value that can be taken by the index.

Specifically, since the index indicating the certainty of a recognition result is usually a value between zero and one, the upper threshold should be smaller than one, and the lower threshold should be larger than zero and smaller than the upper threshold.

When the recognition certainty is at a mid-level, the accumulation determination unit 116 accumulates the recognition target data from the recognition unit 114 in the accumulation unit 117 as relearning data.

The upper and lower thresholds may be predetermined or may be changed in accordance with, for example, the recognition target data received from the recognition unit 114 or the relearning data accumulated in the accumulation unit 117.

For example, the accumulation determination unit 116 may change at least one of the upper threshold and the lower threshold in accordance with a bias in the index indicating the recognition certainty in the relearning data accumulated in the accumulation unit 117.

Specifically, initial values of the upper and lower thresholds are set in advance, and the accumulation determination unit 116 may change at least one of the upper threshold and the lower threshold in accordance with a representative value such as a median, mean, or mode of the recognition target data received from the recognition unit 114 or the relearning data accumulated in the accumulation unit 117 during a predetermined period. For example, the accumulation determination unit 116 may change at least one of the upper threshold and the lower threshold so that the representative value falls between the upper and lower thresholds. Specifically, the accumulation determination unit 116 may set a value larger than the representative value by a predetermined value as the upper threshold and a value smaller than the representative value by a predetermined value as the lower threshold. Alternatively, the accumulation determination unit 116 may change at least one of the upper threshold and the lower threshold so that the representative value is the average of the upper threshold and the lower threshold. When the representative value is larger than the average of the upper threshold and the lower threshold, the accumulation determination unit 116 may increase at least one of the upper threshold and the lower threshold by a predetermined value, and when the representative value is smaller than the average of the upper threshold and the lower threshold, the accumulation determination unit 116 may decrease at least one of the upper threshold and the lower threshold by a predetermined value.

At a relearning timing, the accumulation determination unit 116 sends the relearning data accumulated in the accumulation unit 117 to the learning device 130 via the communication unit 111.

The relearning timing may be, for example, when the amount of recognition target data stored in the accumulation unit 117 reaches a predetermined amount.

Here, the amount of the recognition target data stored in the accumulation unit 117 to be used at the relearning timing may be determined in accordance with the communication traffic between the learning device 130 and the data recognition device 110. For example, the data amount may be decreased as the communication traffic increases.

Alternatively, the relearning timing may be every time a predetermined period passes.

Alternatively, the relearning timing may be the timing of the completion of a predetermined series of operations. For example, the relearning timing may be when the recognition of a certain type of recognition target is started after recognition of another type of recognition target has been completed. In such a case, the type of recognition target indicated by the recognition target data acquired by the data acquisition unit 112 changes. For example, the type of the recognition target changes when the lot of the product or recognition target changes.

The accumulation unit 117 accumulates the recognition target data from the accumulation determination unit 116 as relearning data.

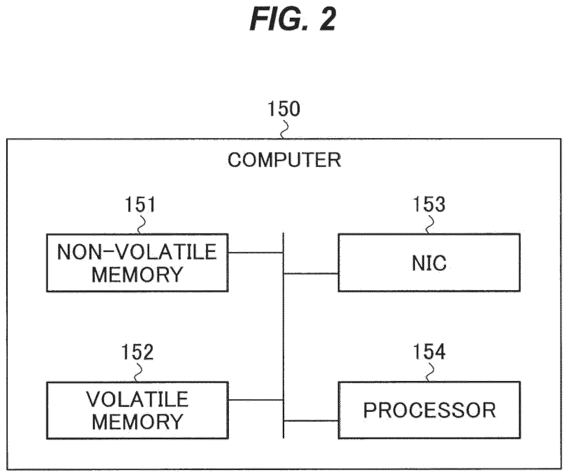

The data recognition device 110 described above can be implemented by a computer 150 as illustrated in FIG. 2.

The computer 150 includes a non-volatile memory 151, a volatile memory 152, a network interface card (NIC) 153, and a processor 154.

The non-volatile memory 151 is an auxiliary storage device that stores data and programs necessary for processing by the computer 150. For example, the non-volatile memory 151 is a hard disk drive (HDD) or a solid state drive (SSD).

The volatile memory 152 is a main storage device that provides the processor 154 with a work area. For example, the volatile memory 152 is a random-access memory (RAM).

The NIC 153 is a communication interface for communicating with other devices.

The processor 154 controls processing by the computer 150. For example, the processor 154 is a central processing unit (CPU) or a field-programmable gate array (FPGA). The processor 154 may be a multiprocessor.

For example, the data acquisition unit 112, the recognition unit 114, the recognition-result output unit 115, and the accumulation determination unit 116 can be implemented by the processor 154 loading the programs stored in the non-volatile memory 151 to the volatile memory 152 and executing these programs.

The model storage unit 113 and the accumulation unit 117 can be implemented by the non-volatile memory 151.

The communication unit 111 can be implemented by the NIC 153.

Such programs may be provided via the network 101 or may be recorded and provided on a recording medium. That is, such programs may be provided as, for example, program products.

Referring back to FIG. 1, the learning device 130 includes a communication unit 131, a storage unit 132, and a model learning unit 133.

The communication unit 131 carries out communication. Here, the communication unit 131 communicates with the data recognition device 110. For example, the communication unit 131 receives relearning data from the data recognition device 110 and sends the data to the storage unit 132.

The storage unit 132 stores the relearning data from the data recognition device 110.

The storage unit 132 also stores an update-target student model, which is a model having the same configuration as the student model stored in the data recognition device 110, and a teacher model of the student model. In this case, the storage unit 132 functions as a teacher-model storage unit.

For example, when a student model is generated with a teacher model in the learning device 130, and the student model is transmitted to the data recognition device 110, a model that is the same as the student model may be stored in the storage unit 132 as an update-target student model.

Alternatively, the update-target student model may be a student model acquired from the data recognition device 110 via the communication unit 131 at a timing of relearning the student model.

The model learning unit 133 uses the relearning data stored in the storage unit 132 to relearn the student model so that the recognition result of the student model approaches the recognition result of the teacher model stored in the storage unit 132.

For example, the model learning unit 133 applies the relearning data stored in the storage unit 132 to the teacher model stored in the storage unit 132 and uses the output to relearn the student model.

Specifically, the model learning unit 133 relearns the student model by fine-tuning the update-target student model stored in the storage unit 132. Since the update-target student model is the same as the second neural network model stored in the model storage unit 113 of the data recognition device 110, here, the second neural network model is fine-tuned.

The model learning unit 133 sends the relearned update-target student model, which is to be the student model, to the data recognition device 110 via the communication unit 131. In the data recognition device 110 that has received the student model, the received student model is stored in the model storage unit 113, and the stored student model is subsequently used for recognition of a recognition target.

Here, the model learning unit 133 may relearn the update-target student model by using only the relearning data stored in the storage unit 132 or may relearn the update-target student model by further adding at least a portion of the learning data used to generate the student model. This can prevent so-called catastrophic forgetting. In this case, it is assumed that the storage unit 132 stores learning data used to generate the student model. In this a case, the storage unit 132 functions as a learning-data storage unit that stores learning data.

When recognition target data and learning data are both used, the model learning unit 133 may perform relearning by weighting at least one of the relearning data and the learning data.

Here, the model learning unit 133 may relearn the student model by applying the weight of at least a portion of the learning data and the weight of the relearning data. The weight of at least a portion of the learning data is different from the weight of the relearning data. In such a case, the model learning unit 133 may, for example, make the weight of the learning data lighter than the weight of the relearning data.

The model learning unit 133 may change the weight of the relearning data in accordance with the difference between the index value of the student model and the index value of the teacher model at the time of relearning data input. For example, when the difference is large, the weight of the relearning data can be increased to enhance the effect of relearning. Also, when the difference is large, the weight of the relearning data can be increased to reduce the influence on the student model.

The learning device 130 described above can be implemented by the computer 150 as illustrated in FIG. 2.

For example, the model learning unit 133 can be implemented by the processor 154 loading the programs stored in the non-volatile memory 151 to the volatile memory 152 and executing these programs.

The storage unit 132 can be implemented by the non-volatile memory 151.

The communication unit 131 can be implemented by the NIC 153.

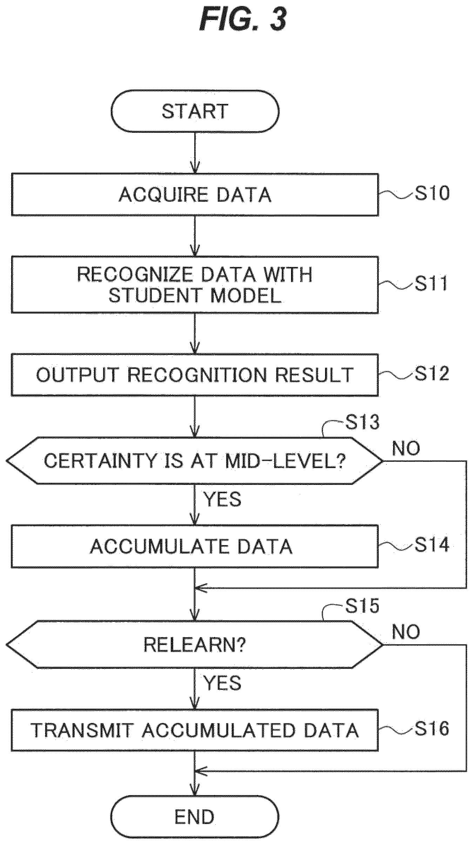

FIG. 3 is a flowchart illustrating the operation of the data recognition device 110 according to the first embodiment.

First, the data acquisition unit 112 acquires recognition target data (step S10). The acquired recognition target data is given to the recognition unit 114.

The recognition unit 114 recognizes a recognition target indicated by the recognition target data by using the student model stored in the model storage unit 113 to draw an inference (step S11). The recognition result obtained by the recognition unit 114 is given to the recognition-result output unit 115. The recognition target data used for the recognition by the recognition unit 114 and an index indicating the certainty of the recognition result are given to the accumulation determination unit 116.

The recognition-result output unit 115 outputs the recognition result (step S12).

The accumulation determination unit 116 determines whether or not the index indicating the certainty of the recognition result indicates mid-level certainty of the recognition result (step S13). If the index indicating the certainty of the recognition result indicates a mid-level (Yes in step S13), the process proceeds to step S14. If the index indicating the certainty of the recognition result does not indicate a mid-level (No in step S13), the accumulation determination unit 116 deletes the received recognition target data, and the process proceeds to step S15.

In step S14, the accumulation determination unit 116 stores the recognition target data as relearning data in the accumulation unit 117 and accumulates the data. The process then proceeds to step S15.

In step S15, the accumulation determination unit 116 determines whether or not it is a relearning timing. If it is a relearning timing (Yes in step S15), the process proceeds to step S16, and if it is not a relearning timing (No in step S15), the process ends.

In step S16, the accumulation determination unit 116 reads the relearning data stored in the accumulation unit 117 and sends this relearning data to the learning device 130 via the communication unit 111.

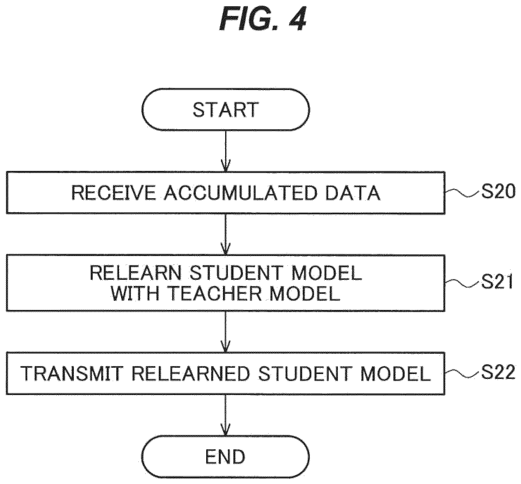

FIG. 4 is a flowchart illustrating the operation of the learning device 130 according to the first embodiment.

First, the communication unit 131 receives relearning data from the data recognition device 110 (step S20). The received relearning data is sent to the storage unit 132, and the storage unit 132 stores this relearning data.

Next, the model learning unit 133 applies the relearning data stored in the storage unit 132 to the teacher model stored in the storage unit 132 and uses an output of the teacher model to relearn the student model (step S21).

Next, the model learning unit 133 sends the relearned student model to the data recognition device 110 via the communication unit 131 (step S22). In the data recognition device 110 that has received the relearned student model, the received student model is stored in the model storage unit 113, and the stored student model is subsequently used for data recognition.

As described above, in the first embodiment, since the student model is relearned on the basis of recognition target data having mid-level certainty for the recognition using the student model, knowledge that has not been transferred from the teacher model to the student model can be appropriately relearned. Therefore, the generalization performance and accuracy of the student model can be improved.

The reasons for using recognition target data having mid-level recognition certainty in relearning are as follows:
Since it is assumed that recognition target data having high recognition certainty has been appropriately learned, relearning using such recognition target data is unnecessary.
Since it is also assumed that recognition target data having low recognition certainty is appropriately learned not to be a recognition target, relearning using such recognition target data is also unnecessary.

The amount of data to be accumulated can be reduced by accumulating only recognition target data having mid-level recognition certainty.

### SECOND EMBODIMENT

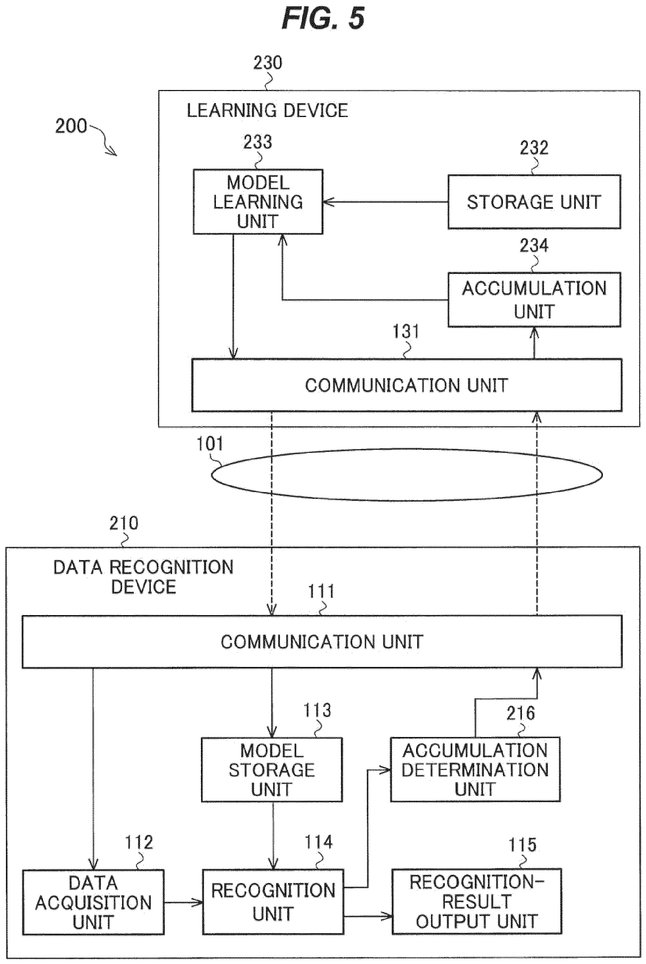

FIG. 5 is a block diagram schematically illustrating a configuration of a relearning system 200 according to the second embodiment.

The relearning system 200 includes a data recognition device 210 and a learning device 230.

For example, the data recognition device 210 and the learning device 230 can communicate with each other via the network 101 such as the Internet.

The data recognition device 210 includes a communication unit 111, a data acquisition unit 112, a model storage unit 113, a recognition unit 114, a recognition-result output unit 115, and an accumulation determination unit 216.

The communication unit 111, the data acquisition unit 112, the model storage unit 113, the recognition unit 114, and the recognition-result output unit 115 of the data recognition device 210 according to the second embodiment are respectively the same as the communication unit 111, the data acquisition unit 112, the model storage unit 113, the recognition unit 114, and the recognition-result output unit 115 of the data recognition device 110 according to the first embodiment.

The data recognition device 210 according to the second embodiment does not include the accumulation unit 117 of the data recognition device 110 according to the first embodiment.

When an index from the recognition unit 114 indicates a mid-level, the accumulation determination unit 216 sends the recognition target data from the recognition unit 114 to the learning device 230 via the communication unit 111 to be used as relearning data.

The learning device 230 includes a communication unit 131, a storage unit 232, a model learning unit 233, and an accumulation unit 234.

The communication unit 131 of the learning device 230 according to the second embodiment is the same as the communication unit 131 of the learning device 130 according to the first embodiment.

However, the communication unit 131 according to the second embodiment receives relearning data from the data recognition device 210 and provides the data to the accumulation unit 234.

The accumulation unit 234 stores the relearning data from the data recognition device 110 to accumulate this data.

The storage unit 232 stores an update-target student model, which is a model having the same configuration as the student model stored in the data recognition device 110, and the teacher model of the student model.

Since the accumulation unit 234 is provided in the second embodiment, the storage unit 232 does not store the relearning data from the data recognition device 210. The storage unit 232 may store the learning data used to generate the student model.

The model learning unit 233 applies the relearning data stored in the accumulation unit 234 to the teacher model stored in the storage unit 132 and uses the output to relearn the student model at a relearning timing. Here, the model learning unit 233 relearns the student model by fine-tuning the update-target student model stored in the storage unit 232.

The model learning unit 233 then sends the relearned update-target student model to the data recognition device 210 via the communication unit 131 to be used as the student model. In the data recognition device 210 that has received the student model, the received student model is stored in the model storage unit 113, and the stored student model is subsequently used for data recognition.

The learning device 230 described above can also be implemented by the computer 150 as illustrated in FIG. 2.

Specifically, the accumulation unit 234 can also be implemented by the non-volatile memory 151.

In the second embodiment, the model learning unit 233 determines whether or not it is a relearning timing, but the second embodiment is not limited to such an example. For example, as in the first embodiment, the accumulation determination unit 216 may determine whether or not it is a relearning timing. In this case, when it is a relearning timing, the accumulation determination unit 216 only has to send a relearning instruction to the learning device 230 via the communication unit 111. Then, the model learning unit 233 of the learning device 230 that has received such an instruction may relearn the student model.

In the above-described first and second embodiments, the model learning units 133 and 233 relearn the student model by updating the update-target student model, in other words, by fine-tuning the update-target student model, but the first and second embodiments are not limited to such examples. For example, the model learning units 133 and 233 may relearn the student model by adding relearning data to the learning data used to generate the student model and generating a new neural network. The neural network generated here is also referred to as a third neural network to distinguish it from the second neural network already used as the student model. In this case, also, the model learning units 133 and 233 may apply the weight of the learning data and the weight of the relearning data to relearn the student model. The weight of the at least a portion of the learning data is different from the weight of the relearning data.

In the above-described first and second embodiments, the data recognition devices 110 and 210 each include the model storage unit 113; however, the first and second embodiments are not limited to such examples. For example, the model storage unit 113 may be provided in the learning device 230 or another device connected to the network 101.

In the above-described second embodiment, the learning device 230 includes the accumulation unit 234; however, the second embodiment is not limited to such an example. For example, the accumulation unit 234 may be provided in a device connected to the network 101, other than the data recognition device 210 and the learning device 230. The storage units 132 and 232 may alternatively be provided in a device connected to the network 101, other than the data recognition device 210 and the learning device 230.

Furthermore, the first neural network used as the teacher model may be a neural network that is larger and more complex than the second neural network used as the student model, or the first neural network may be the same neural network as the second neural network.

### DESCRIPTION OF REFERENCE CHARACTERS

100 relearning system; 110 data recognition device; 111 communication unit; 112 data acquisition unit; 113 model storage unit; 114 recognition unit; 115 recognition-result output unit; 116 accumulation determination unit; 117 accumulation unit; 130 learning device; 131 communication unit; 132 storage unit; 133 model learning unit.

## Claims

1. A relearning system comprising:
a model storage unit configured to store a second neural network learned so that a recognition result by the second neural network used as a student model approaches a recognition result by a first neural network used as a teacher model;
a recognition unit configured to perform recognition of a recognition target by using the second neural network to draw an inference about recognition target data indicating the recognition target;
a determination unit configured to determine whether or not certainty of the recognition is at a mid-level;
an accumulation unit configured to accumulate the recognition target data as relearning data when the certainty of the recognition is at mid-level, the certainty of the recognition of the recognition target data being determined to be at mid-level; and
a model learning unit configured to relearn the student model by using the relearning data so that a recognition result of the student model approaches a recognition result of the teacher model.

2. The relearning system according to claim 1, wherein the determination unit determines that the certainty of the recognition is at a mid-level when an index indicating the certainty of the recognition falls between a first threshold and a second threshold, the first threshold being smaller than a maximum value assumed to be the index indicating the certainty of the recognition, the second threshold being larger than a minimum value assumed to be the index indicating the certainty of the recognition and smaller than the first threshold.

3. The relearning system according to claim 2, wherein the determination unit changes at least one of the first threshold and the second threshold in accordance with a bias in the index indicating the certainty of the recognition for the relearning data.

4. The relearning system according to any one of claims 1 to 3, wherein the model learning unit relearns the student model when an amount of the relearning data accumulated in the accumulation unit reaches a predetermined amount.

5. The relearning system according to any one of claims 1 to 3, wherein the model learning unit relearns the student model every time a predetermined period passes.

6. The relearning system according to any one of claims 1 to 3, wherein the model learning unit relearns the student model when a predetermined series of operations is completed.

7. The relearning system according to any one of claims 1 to 6, wherein the model learning unit relearns the student model by performing fine-tuning of the second neural network.

8. The relearning system according to claim 7, further comprising:
a storage unit configured to store learning data used to learn the second neural network, wherein
the model learning unit performs the fine-tuning by using the relearning data and at least a portion of the learning data.

9. The relearning system according to claim 8, wherein the model learning unit applies a weight of the at least a portion of the learning data and a weight of the relearning data, the weight of the at least a portion of the learning data being different from the weight of the relearning data to relearn the student model.

10. The relearning system according to any one of claims 1 to 6, further comprising:
a storage unit configured to store learning data used to learn the second neural network, wherein
the model learning unit relearns the student model by newly learning a third neural network used as the student model by using the learning data and the relearning data.

11. The relearning system according to claim 10, wherein the model learning unit applies a weight of the learning data and a weight of the relearning data, the weight of the learning data being different from the weight of the relearning data to relearn the student model.

12. A relearning method comprising:
recognizing a recognition target by using a second neural network to draw an inference about recognition target data indicating the recognition target, the second neural network being learned so that a recognition result of the second neural network used as a student model approaches a recognition result of a first neural network used as a teacher model;
determining whether or not certainty of the recognition is at a mid-level;
accumulating the recognition target data as relearning data when the certainty of the recognition is at mid-level, the certainty of the recognition of the recognition target data being determined to be at mid-level; and
relearning the student model by using the relearning data so that a recognition result of the student model approaches a recognition result of the teacher model.
